# EUROPEAN PATENT SPECIFICATION

(11) **EP 3 772 798 B1**
(45) Date of publication and mention of the grant of the patent: **19.08.2026**
(21) Application number: 19216309.5
(22) Date of filing: 13.12.2019
(51) Int. Cl.: H02K 1/14, H02K 9/22, H02K 5/20, H02K 3/52, H02K 3/30, H02K 3/34, H02K 3/18

(54) **SEGMENTED AND INDIVIDUALLY WOUND STATOR CORE FOR ELECTRIC PROPULSION MOTOR**
SEGMENTIERTER UND INDIVIDUELL GEWICKELTER STATORKERN FÜR EINEN ELEKTRISCHEN ANTRIEBSMOTOR
NOYAU DE STATOR SEGMENTÉ ET ENROULÉ INDIVIDUELLEMENT POUR MOTEUR À PROPULSION ÉLECTRIQUE

(30) Priority: 06.08.2019 US 201916532703
(43) Date of publication of application: 10.02.2021
(73) Proprietor: Hamilton Sundstrand Corporation, Charlotte, NC 28217-4578 (US)
(72) Inventor: SAWATA, Tadashi, Coventry, CV3 5BN (GB); TANGUDU, Jagadeesh Kumar, South Windsor, CT 06074 (US); KSIHRSAGAR, Parag M., South Windsor, CT 06074 (US)
(74) Representative: Dehns

(56) References cited:
- CN-A- 108 880 045
- DE-A1- 10 312 441
- DE-A1- 102008 054 529
- DE-A1- 102011 108 043
- DE-A1- 102013 216 207
- DE-A1- 102013 226 149
- DE-A1- 2 826 607
- JP-A- 2007 089 326
- JP-A- 2008 278 654
- JP-A- H08 275 414
- US-A- 2 769 104
- US-A1- 2012 169 172
- US-A1- 2014 015 356
- US-A1- 2015 188 372
- US-A1- 2017 104 378
- US-A1- 2018 175 706
- US-A1- 2018 233 981

## Description

### TECHNICAL FIELD

The present disclosure relates to electric motors, and in particular to electric motors that may be used for electric propulsion systems such as those used in aircraft or other vehicles.

### BACKGROUND

Typically, electric propulsion systems require high power densities and are operated at several hundred kW or higher. This high power requirement means that the electric motors operate at very high temperatures, which can affect performance and safety. In addition, the voltage of the aircraft power system increases with increased power consumption of the motor.

Such electric motors may be driven and controlled using a PWM (pulse-width-modulation) inverter, which may be located at a distance from the motor and therefore require long cabling. High voltage switching speeds (dv/dt) are often used in the PWM inverter to improve performance.

The above-discussed factors (high operating temperatures, high voltage, long cabling and high voltage switching speeds) together with the low ambient pressure at the operating altitude of an aircraft, contribute to an increased probability of the occurrence of a partial discharge within the motor. Partial discharge in the motor can lead to significant damage to the wire insulation and drastically reduce the lifetime of the motor.

As the electric motors are a critical part of the propulsion system of an electrically powered aircraft, it is crucial that they be checked regularly for damage such that maintenance and repair work can be carried out. The maintenance and repair of conventionally-manufactured electric motors is time-consuming, expensive and technically difficult. One way in which the need for maintenance and repair may be reduced is to more effectively remove heat from the motor during operation. This may also increase the practicable power density of the motor.

US 9,148,040 B2 describes an electromagnetic component for mounting in a framework so as to provide a stator segment of an electrical machine.

US 2019/0081532A1 describes an electrical machine that has a variable reluctance rotor and a stator formed as an annular array of stator segments.

EP 3255759 A1 describes a stator with a plurality of wound segment assemblies. US 2017/104378 A1 and DE 102008054529A1 relate to wound stator segments. US2015/188372A1 and US2769104A also relate to wound stator segments.

### SUMMARY

A stator core as defined in claim 1 is provided.

The coil comprises a first terminal at its first end and a second terminal at its second end, and each terminal is configured to be connectable to and detachable from a terminal of an adjacent individually wound stator segment.

The coil comprises a first terminal at its first end and a second terminal at its second end, and each terminal may be configured to be connectable to and detachable from a motor.

The manner in which the coils are connected may vary depending on the specific design of the motor. The examples described herein therefore provide a means of flexibility that can accommodate various motor designs.

The stator core further comprises a sheet of thermally conductive material, disposed between the windings of said coils.

In any of the examples described herein, the thermally conductive material may be carbon nanotubes.

In any of the examples described herein, the stator core may further comprise a plurality of said sheets.

In any of the examples described herein, the conductive wire may comprise stranded copper.

In any of the examples described herein, the stator core may further comprise cooling means provided on the circumferentially outermost surface of said back iron section.

In any of the examples described herein, the cooling means may be made from a thermally conductive material.

In any of the examples described herein, the cooling means may comprise cooling channels provided therein.

In any of the examples described herein, the plurality of individually wound stator segments may comprise means for mechanically connecting each individually wound stator segment with an adjacent individually wound stator segment.

In some examples, the means for mechanically connecting the stator segments together may comprise a retaining ring provided so as to extend around the outer circumference of the stator core.

In some examples, the means for mechanically connecting the stator segments together may be segmented. Each segmented section may mirror the dimensions of the individual stator segments.

### BRIEF DESCRIPTION OF DRAWINGS

Figure 1a shows an assembled segmented and individually wound stator core of an electric propulsion motor not falling within the claimed invention.
Figure 1b shows the segmented and individually wound stator core of figure 1 and depicts the removal of one segment not falling within the claimed invention.
Figure 2 shows a segment of a segmented stator core of an electric propulsion motor with inserted carbon nanotube sheets in a vertical arrangement not falling within the claimed invention.
Figure 3 shows a segment of a segmented stator core of an electric propulsion motor with a mid-slit feature.
Figure 4 depicts an example of an assembled stator in combination with bus-bar interconnecting coils not falling within the claimed invention.
Figure 5 depicts an assembled stator not falling within the claimed invention such as that shown in figures 1a and 1b showing the connections to the bus bar as threaded terminals.
Figure 6 depicts a segment of the core and shows an example of cooling channels provided in the segment.
Figure 7 shows an individual segment of a segmented stator core of an electric propulsion motor with inserted carbon nanotube sheets in a horizontal arrangement not falling within the claimed invention.
Figure 8 depicts an assembled stator core with the segments thereof retained by a segmented ring housing not falling within the claimed invention.

### DETAILED DESCRIPTION

Stator cores of electric motors are formed of a number of stator teeth having coil windings, the stator teeth being arranged side by side in a circular configuration. According to a typical construction, the stator core comprises a unitary circular frame with a plurality of stator teeth extending radially inwards. A length of conductive wire is wound continuously and consecutively around each stator tooth a number of times until each tooth supports a coiled portion of the same wire. The result is an electrically connected series of small coils with axes extending in a radial direction with respect to the circular frame. The nature of the continuous winding of the conductive wire around the teeth and frame means, however, that in the event of damage to a part of the stator core, repair can be time consuming, difficult and expensive.

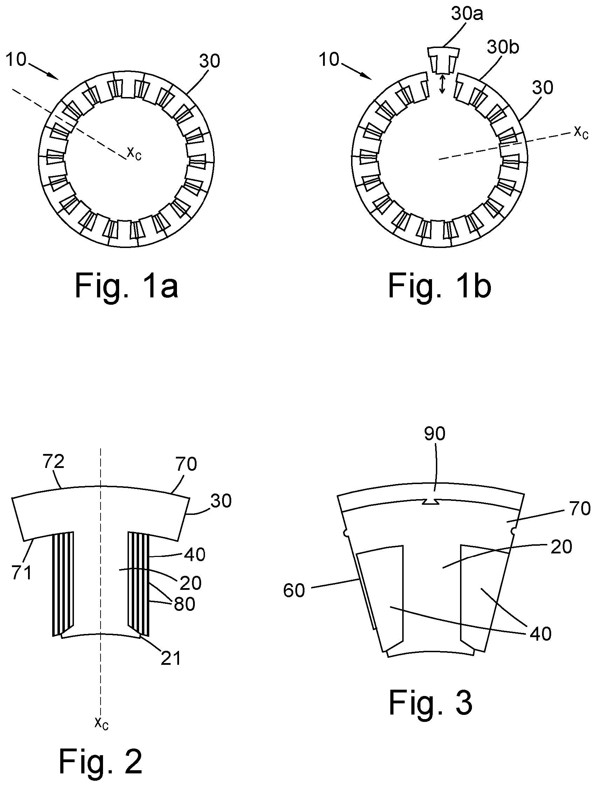

Figures 1a and 1b show an example of a segmented stator core 10 according to the new examples described herein. As illustrated, this new type of stator core 10, rather than being formed from a single integral circular frame, is composed of a plurality of segments 30 which, when attached/connected to one another, form a complete circular structure 10. In this example, each individual segment 30 comprises one tooth section 20 and one back iron section 70. The tooth section 20 and back iron section 70 may be integrally formed together to have a substantially T-shaped cross section, as can be seen in the figures. The radially inward 71 and outward 72 surfaces of the back iron section 70 may have a radius of curvature equal to that of the assembled circular stator core 10, as shown in figures 1a and 1b.

In this example, each segment 30 is individually wound with conductive wire 40, which in some examples may be stranded copper. The wire 40 is individually wound around the tooth section 20 of the segment 30 so as to form a coil 40. As can be seen in figures 1a and 1b, individual segments 30 have a central axis x_{c} extending from the outer surface of the back iron section 70 to the inner most surface of the T-section 20, this axis being perpendicular to the rotational axis xᵣ of the stator core as shown in figure 1b.

The tooth section 20 may also comprise a flared section 21 at its innermost radial end (i.e. the end closest to the central axis of rotation xᵣ). This outwardly flared section 21 provides means that helps to retain the coil 40 in position, once wound.

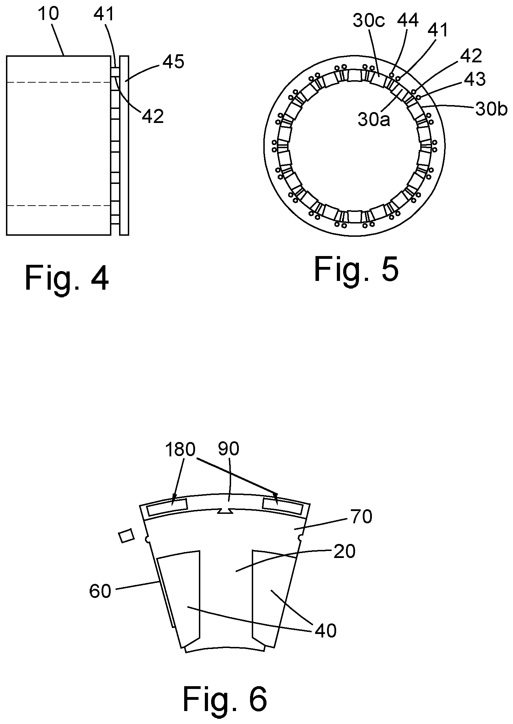

The individual coil winding 40 of each segment 30 may have a first terminal 41 at one end and a second terminal 42 at the opposite end and each individual segment 30 be arranged such that its terminals 41, 42 can be connected to and disconnected from other components via inter-coil leads or bus bars 45 (shown in figures 4and 5).

This means that, in some examples, a first segment 30a may be attached to a second, neighbouring segment 30b, so that a terminal 42 of the wound wire (coil) portion 40 of the first segment 30a is in electrical connection with a terminal 43 of the wound wire (coil) portion 40 of the adjacent second segment 30b as shown in figure 5. The same situation can occur at the other side of the first stator segment 30a, so that the terminal 41 of segment 30a is connected to a terminal 44 of a third segment 30c positioned on the opposite side of the first segment 30a as shown in figure 5.

It is also envisaged, that in some examples, the wire terminals of each segment 30a, 30b, 30c are not connected to the terminals of other segments 30, but that each segment 30 is individually, externally connected to the input/output of the motor. The segmented nature of the stator core structure 10 and the fact that each segmented stack has its own individual winding 40 greatly facilitates maintenance and repair work thereof, through the ability to isolate a specific segment 30 to check for damage such as degradation of insulation. Since these stator segments are individually wound, they are also each individually removable and insertable.

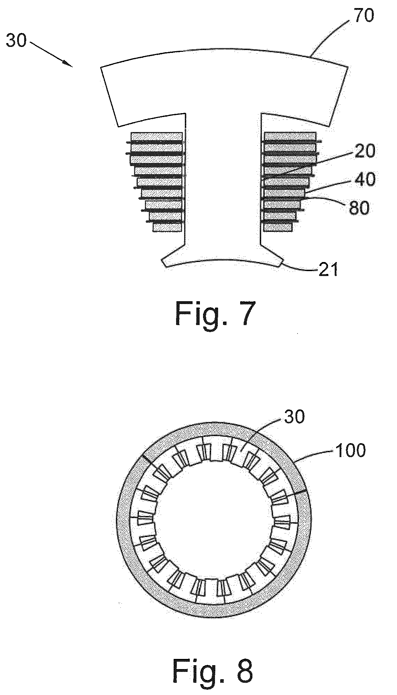

In some examples, the segments 30 can be retained in position relative to each other by a ring housing 100 (figure 8) fitted over the segments 30 and around the outer circumference of the assembled stator core. The ring housing 100 itself can also be segmented, and/or have dimensions that match the dimensions of the individual stator segments 30 such that only a part of the ring housing need be removed should a segment 30 of the stator core need to be replaced. Each stator segment 30 can then be separately and individually replaced or repaired, as required. In the example shown in figure 8 the retaining ring 100 has two segments, however, the examples are not limited to this and the retaining ring may have more segments. In some examples, the segments of the retaining ring may match the dimensions of the individual stator segment 30.

This maintenance procedure is comparable to that of the fins of a gas turbine engine or compressor. Since the individual stator core segments described herein are individually removable, insertable and replaceable, this ability to isolate segments 30 of the stator core 10 for replacement also greatly reduces costs associated with repair, as single segments 30 can be replaced, as required, rather than the whole motor.

The manufacture of such stator segments 30 also enables an improvement in the slot fill factor of the coils 40, as each coil 40 can be wound separately and individually. Manufacturing is made cheaper and simpler by virtue of the fact that each of the segments 30 used throughout the stator 10 is alike, also meaning that additional segments 30 can be stored as spare parts. An automated winding machine can also easily be adopted for individual segments 30.

Figure 2 shows an example of an implementation of the examples shown in figures 1a and 1b wherein each segment 30 is also provided with thermally conductive sheets 80, which in some examples may be as carbon nanotube (CNT) sheets. As shown in figure 2, the thermally conductive sheets 80 may be disposed so as to be positioned between the windings of the coil 40.

**In** figure 2, the thermally conductive sheets 80 are shown to be disposed vertically between the windings, i.e. extending in a radial direction from the central axis of rotation xc. It is also envisaged, however, that the thermally conductive sheets 80 may be disposed horizontally, i.e. such that they extend along the sides of the T-shaped stator cores 30 and are perpendicular to the longitudinal axis of the stator tooth *x_{c}.* These may be positioned at varying radial distances from the central axis of rotation. This horizontal arrangement is illustrated in figure 7.

**In** some examples, the material for the thermally conductive sheets may be Carbon Nanotubes (CNT), as this material offers a relatively high thermal conductivity that works well with the conditions that the stator core would experience in use. Other materials having similar properties may also be used, however, and the examples are not limited to CNT.

The inclusion of these thermally conductive sheets 80 means that heat generated from the coils 40 during operation, due to high currents passing therethrough, is more effectively conducted to the back iron section 70 and the tooth section 20 of the segment 30. This removal of heat from the windings 40 reduces the risk of damage to the segment 30 due to possible overheating. The heat is instead channelled to the back iron section 70 where it can be more effectively radiated. This enhanced thermal conductivity and flexibility in the design of the orientation of conduction paths means that the stator core 10 can operate at higher power densities whilst remaining below a temperature threshold.

Figure 3 shows another example of an individual segment 30 as described herein. **In** this example, the segment 30 is provided with a projection 60 which is provided on one side of the segment 30 and can be made from the same material as the tooth section 20. This projection 60 extends from the back iron section 70 (i.e. from the upper part of the "T-shape" of the segment 30 and extends therefrom radially inwardly, in the direction of the flared end 90 and the central axis xc. In the example shown in figure 3, the projection extends almost to the bottom part of the "T-shape" of the stator core segment 30.

By providing this projection 60 on one side of the segment 30 means that, once the stator core 10, with all the constituent segments 30, is assembled, one projection 60 is provided at each interface between adjoining segments 30. The inclusion of this projection 60 means that an additional heat transfer path is now provided between the individual segments 30. This contributes to an increased thermal conductivity between the coil windings 40 and the back iron section 70, from where it can be more effectively removed. The length of the projection 60 can be selected in order to optimise the balance between the need for heat transfer and the ease of winding the coil 40. Heat may further also be removed from the back iron section 70 by air or cooling channels in the back iron.

In some examples, the back iron section 70 may also comprise a cooling means 90 provided on or within the outside surface of the back iron section 70 (i.e. the circumferentially outermost facing surface) in order to also facilitate the removal of heat. The cooling means 90 may be a cooling frame feature that is made of a high thermal conductivity material. The addition of the projection 60 and/or cooling frame 90 means that the power density can be increased without exceeding a temperature threshold. In some examples, cooling channels 180 may additionally be disposed so as to extend within the cooling frame 90 as shown in figure 6. In these examples, fluid or gas may be flowed through the cooling channels to remove heat from the stator segment 20 through the back iron 70. The cooling fluid may comprise a liquid or gaseous cooling fluid such as water glycol, oil, air, Freon ^{®} or other chlorofluorocarbons. The examples are not limited to this and other fluid or gas that is capable of transferring heat may also be envisaged.

## Claims

1. A stator core (10) comprising a plurality of individually wound stator segments,
wherein a first of said plurality of individually wound stator segments (30) has a T-shaped cross-section wherein the top part of the T-shape is formed by a back iron section (70) and the bottom part of the T-shape is formed by a tooth section (20), and
wherein a coil of conductive wire (40) is individually wound around the tooth section of the stator core segment and wherein said coil comprises a first terminal (41) at its first end and a second terminal (42) at its second end, and wherein each terminal is configured to be connectable to and detachable from a terminal of an adjacent individually wound stator segment; further comprising a sheet of thermally conductive material (80), disposed between the windings of the coil; wherein said individually wound segment (30) has a central axis (Xc) extending from a radially outer surface of the back iron section (70) to the radially innermost surface of the tooth section and wherein said sheet extends in a direction perpendicular or parallel to said longitudinal axis of the stator tooth (Xc),
wherein said first individually wound stator segment comprises a projection (60) extending radially inwardly towards a central axis of said stator core from the back iron section (70); wherein said projection (60) is provided only on one side of first individually wound stator segment, adjacent to a second individually wound stator segment; and
wherein said projection (60) is positioned at an outermost surface of the coil winding (40) and between the coil winding of the first individually wound stator segment and the coil winding of said adjacent, second, individually wound stator segment.

2. The stator core of claim 1, wherein said thermally conductive material (80) comprises carbon nanotubes.

3. The stator core of any of claims 1 or 2, further comprising a plurality of said sheets (80).

4. The stator core of any preceding claim, wherein the conductive wire (40) comprises stranded copper.

5. The stator core of any preceding claim, further comprising cooling means (90) provided on the circumferentially outermost surface of said back iron section (70).

6. The stator core of claim 5, wherein said cooling means (90) is a frame made from a thermally conductive material.

7. The stator core of claim 5 or 6, wherein said cooling means (90) comprises cooling channels provided therein.

8. The stator core of any preceding claim, wherein said plurality of individually wound stator segments (30) comprise means for mechanically connecting each individually wound stator segment with an adjacent individually wound stator segment.

9. The stator core of claim 8, wherein the means for mechanically connecting the stator segments to each other comprises a retaining ring (100) provided so as to extend around an outer circumference of the stator core, and wherein the retaining ring is segmented.

## Patentansprüche

1. Statorkern (10), umfassend eine Vielzahl von individuell gewickelten Statorsegmenten,
wobei ein erstes der Vielzahl von individuell gewickelten Statorsegmenten (30) einen T-förmigen Querschnitt aufweist, wobei der obere Teil des T-förmigen Querschnitts durch einen Magnetrückschluss-Teilabschnitt (70) ausgebildet ist und der untere Teil des T-förmigen Querschnitts durch einen Zahn-Teilabschnitt (20) ausgebildet ist, und
wobei eine Spule aus elektrisch leitfähigem Draht (40) individuell um den Zahn-Teilabschnitt des Statorkernsegments gewickelt ist und wobei die Spule an ihrem ersten Ende einen ersten Anschluss (41) und an ihrem zweiten Ende einen zweiten Anschluss (42) umfasst und wobei jeder Anschluss so konfiguriert ist, dass er mit einem Anschluss eines benachbarten individuell gewickelten Statorsegments verbunden und davon getrennt werden kann; ferner umfassend eine Platte aus wärmeleitendem Material (80), die zwischen den Wicklungen der Spule angeordnet ist; wobei das individuell gewickelte Segment (30) eine Mittelachse (Xc) aufweist, die sich von einer radial äußeren Oberfläche des Magnetrückschluss-Teilabschnitts (70) zur radial innersten Oberfläche des Zahn-Teilabschnitts erstreckt und wobei sich die Platte in einer Richtung senkrecht oder parallel zu der Längsachse des Statorzahns (Xc) erstreckt,
wobei das erste individuell gewickelte Statorsegment einen Vorsprung (60) umfasst, der sich von dem Magnetrückschluss-Teilabschnitt (70) radial nach innen in Richtung einer Mittelachse des Statorkerns erstreckt; wobei der Vorsprung (60) nur auf einer Seite eines ersten individuell gewickelten Statorsegments benachbart zu einem zweiten individuell gewickelten Statorsegment bereitgestellt ist; und
wobei der Vorsprung (60) an einer äußersten Oberfläche der Spulenwicklung (40) und zwischen der Spulenwicklung des ersten individuell gewickelten Statorsegments und der Spulenwicklung des benachbarten zweiten individuell gewickelten Statorsegments positioniert ist.

2. Statorkern nach Anspruch 1, wobei das wärmeleitende Material (80) Kohlenstoffnanoröhrchen umfasst.

3. Statorkern nach einem der Ansprüche 1 oder 2, ferner umfassend eine Vielzahl von den Platten (80).

4. Statorkern nach einem der vorhergehenden Ansprüche, wobei der elektrisch leitfähige Draht (40) Kupferlitze umfasst.

5. Statorkern nach einem der vorhergehenden Ansprüche, ferner umfassend Kühlmittel (90), die auf der in Umfangsrichtung äußersten Oberfläche des Magnetrückschluss-Teilabschnitts (70) bereitgestellt sind.

6. Statorkern nach Anspruch 5, wobei das Kühlmittel (90) ein Rahmen ist, der aus einem wärmeleitenden Material hergestellt ist.

7. Statorkern nach Anspruch 5 oder 6, wobei das Kühlmittel (90) Kühlkanäle umfasst, die darin bereitgestellt sind.

8. Statorkern nach einem der vorhergehenden Ansprüche, wobei die Vielzahl von individuell gewickelten Statorsegmenten (30) Mittel zum mechanischen Verbinden jedes individuell gewickelten Statorsegments mit einem benachbarten individuell gewickelten Statorsegment umfasst.

9. Statorkern nach Anspruch 8, wobei das Mittel zum mechanischen Verbinden der Statorsegmente miteinander einen Haltering (100) umfasst, der so bereitgestellt ist, dass er sich um einen äußeren Umfang des Statorkerns erstreckt, und wobei der Haltering segmentiert ist.

## Revendications

1. Noyau de stator (10) comprenant une pluralité de segments de stator enroulés individuellement,
dans lequel un premier de ladite pluralité de segments de stator enroulés individuellement (30) présente une section transversale en forme de T, la partie supérieure de la forme en T étant formée par une section de contrefer (70) et la partie inférieure de la forme en T étant formée par une section dentée (20), et
dans lequel une bobine de fil conducteur (40) est enroulée individuellement autour de la section dentée du segment de noyau de stator et dans lequel ladite bobine comprend une première borne (41) au niveau de sa première extrémité et une seconde borne (42) au niveau de sa seconde extrémité, et dans lequel chaque borne est configurée pour être connectée et déconnectée d'une borne d'un segment de stator enroulé individuellement adjacent ; comprenant en outre une feuille de matériau thermoconducteur (80), disposée entre les enroulements de la bobine ; dans lequel ledit segment enroulé individuellement (30) a un axe central (Xc) s'étendant d'une surface radialement extérieure de la section de contrefer (70) à la surface radialement la plus à l'intérieur de la section dentée et dans lequel ladite feuille s'étend dans une direction perpendiculaire ou parallèle audit axe longitudinal de la dent de stator (Xc), dans lequel ledit premier segment de stator enroulé individuellement comprend une saillie (60) s'étendant radialement vers l'intérieur, en direction d'un axe central dudit noyau de stator, à partir de la section de contrefer (70) ; ladite saillie (60) étant prévue uniquement d'un côté du premier segment de stator enroulé individuellement, adjacent à un deuxième segment de stator enroulé individuellement ; et
dans lequel ladite saillie (60) est positionnée au niveau d'une surface la plus à l'extérieur de l'enroulement de bobine (40) et entre l'enroulement de bobine du premier segment de stator enroulé individuellement et l'enroulement de bobine dudit deuxième segment de stator enroulé individuellement adjacent.

2. Noyau de stator selon la revendication 1, dans lequel ledit matériau thermoconducteur (80) comprend des nanotubes de carbone.

3. Noyau de stator selon l'une quelconque des revendications 1 ou 2, comprenant en outre une pluralité desdites feuilles (80).

4. Noyau de stator selon une quelconque revendication précédente, dans lequel le fil conducteur (40) comprend du cuivre torsadé.

5. Noyau de stator selon une quelconque revendication précédente, comprenant en outre des moyens de refroidissement (90) disposés sur la surface circonférentiellement la plus à l'extérieur de ladite section de contrefer (70).

6. Noyau de stator selon la revendication 5, dans lequel lesdits moyens de refroidissement (90) sont un cadre constitué d'un matériau thermoconducteur.

7. Noyau de stator selon la revendication 5 ou 6, dans lequel lesdits moyens de refroidissement (90) comprennent des canaux de refroidissement prévus en leur sein.

8. Noyau de stator selon une quelconque revendication précédente, dans lequel ladite pluralité de segments de stator enroulés individuellement (30) comprend des moyens pour relier mécaniquement chaque segment de stator enroulé individuellement avec un segment de stator enroulé individuellement adjacent.

9. Noyau de stator selon la revendication 8, dans lequel les moyens pour relier mécaniquement les segments de stator les uns aux autres comprennent un anneau de retenue (100) prévu de manière à s'étendre autour d'une circonférence extérieure du noyau de stator, et dans lequel l'anneau de retenue est segmenté.
